# EUROPEAN PATENT APPLICATION

(11) **EP 1 416 664 A2**
(43) Date of publication of application: **06.05.2004**
(21) Application number: 03256826.3
(22) Date of filing: 29.10.2003
(51) Int. Cl.: H04L 9/06

(54) **Data encryption method**

(30) Priority: 29.10.2002 MY 0204037
(71) Applicant: Hai-O Informtec Sdn Bhd, Kuala Lumpur 55200 (MY)
(72) Inventor: Wu, Jin Mu, Ding Zi Gu Tianjin 300130 (CN); Li, Wang Chao, Ding Zi Gu Tianjin 300130 (CN)
(74) Representative: Mounteney, Simon James

(57) **Abstract**

A method of encrypting binary-coded data using block encryption and a private key is characterized by generating from the key a cipher that changes block-by-block. A hardware implementation has a cipher-generating stage (12,14,16,18,20) and a cipher-applying stage (24,26,28,30). The cipher-applying stage uses logic circuitry that performs the encryption with only simple switching operations of AND, XOR and OR, allowing very high speed performance.

## Description

### Technical Field

This invention relates to a data encryption method and corresponding decryption method. The invention further relates to products, whether in the form of software, hardware or a combination of both, for use in implementing such methods.

### Background Art

Encryption systems have been categorized in the art into two types based on the characteristics of the cryptographic key: asymmetric encryption systems and symmetric encryption systems. Asymmetric encryption systems are also called dual-key systems or public-key systems. In the public-key encryption systems, there is a public key and a private key. The public key is made public while the private key remains secret. Encryption is performed with the public key while decryption is done with the private key. The public key and private key are totally different and it is difficult to derive one by inference from the other. Thus, the ability to encrypt can be separated from the ability to decrypt. Symmetric encryption systems are also called single-key systems, private-key systems or traditional encryption systems. In the private-key systems, the keys to encrypt and decrypt are either exactly the same, or they are easily derived by inference from each other. Private-key systems can be categorized into stream encryption systems and block encryption systems. In a stream encryption system, plain data is encrypted on an element-by-element basis. In contrast, in a block encryption system, plain data is divided into blocks with each block containing plural elements, and encryption is carried out on a block-by-block basis.

The present invention is a symmetric or private-key encryption system that operates on blocks of binary-coded information (hereinafter referred to simply as "binary data") in which all digital data can be expressed. DES (or Data Encryption Standard) is so far the most popular and extensively used system of block encryption. It was adopted as a federal government standard in the United States in 1977 for the encryption of unclassified information. The basic concept of block encryption under DES is that encryption consists of a one-to-one mapping from plain data (also referred to in the art as "plaintext") to encrypted data ("ciphertext") while a reverse one-to-one mapping from encrypted data to plain data is applied in decryption. This concept means that for any given plain data, there is one and only one version of the encrypted data. Similarly, for any given encrypted data, there is one and only one version of the decrypted data. In other words, the algorithms applied during encryption and decryption are respectively fixed and do not change.

DES is a public standard. The encryption and decryption algorithms are published and their use is encouraged. The security is based solely on the number of possible keys. With DES, for a block size of n, the maximum number of one-to-one encryption mappings, or of one-to-one reverse decryption mappings is 2ⁿ. The block size in the DES standard is 64 bits and the key has 56 bits with an additional 8 bits included only for error detection. This gives a total number of keys of approximately 7.2 x 10¹⁶.

The rapid developments in computing technology in recent years, in particular the ability to process vast amounts of data at high speed, meant that DES could not withstand the application of brute force in terms of computing power. In the late 1990s, specialized "DES Cracker" machines were built that could recover a DES key after a few hours by trying possible key values. As a result, after 21 years of application, the use of DES was discontinued by the United States in 1998.

In 2001, the United States launched a new data encryption standard called AES (or Advanced Encryption Standard) and it was officially approved with effect from 26^{th} May 2002. However, this new standard has no theoretical or technical innovation over its predecessor DES. The basic concept remains the same and essentially all that has changed is that the block size n has been doubled. The AES standard specifies a block size of 128 bits and key sizes of 128, 192 or 256 bits. Although the number of 128-bit key values under AES is about 10²¹ times more than the number of 56-bit DES keys, future advances in computer technology may be expected to compromise the new standard in due course. Moreover, the increase in block size may be inconvenient to implement.

With the ever-increasing amount of personal and commercially-sensitive data that is being transmitted over public media such as the internet for e-mail communication and free-space for wireless communication, there is clearly a need for a new concept and approach in block encryption. Apart from safeguarding the privacy and secrecy of such personal and commercial data, the new standard must offer a better prospect of not being compromised in the future. The aim of this invention is to fulfil such a need.

### Disclosure of Invention

In accordance with this invention, a method of encrypting binary data using block encryption and a private key comprises:
generating a first series of coding transforms using the private key, the series of coding transforms being generated in a repeatable manner;
each coding transform of the first series adapted to modify elements within a block of binary data to be encrypted; and
encrypting blocks of binary data by selectively applying the coding transforms.

A key feature of this invention is that the traditional one-to-one mapping from plain data to encrypted data is replaced by many-to-many mapping, as the coding transform applied to a data block changes over time. In other words, for any given plain data, there are many possible versions of the encrypted data. Similarly, any given encrypted data corresponds to many possible versions of original plain data. Breaking this encryption thus becomes a monumental task because the cipher represents a moving target, with different coding transforms being applied to different blocks of data. Preferably, the series of coding transforms has a pseudo-random nature.

In a preferred embodiment, a different coding transform of the first series is used to encrypt each block of plain data. The coding applied to the plain data thus changes on a block-by-block basis. The generation of the coding transforms must be repeatable in order to realize decryption. However, the series of coding transforms cannot be re-generated from analysis of the series. The cipher generation process is controlled by the private key.

In a preferred embodiment, sequentially generated coding transforms of the first series are used to encrypt sequential blocks containing the binary data. Other arrangements are possible, including applying the same transform to a number of sequential blocks, and not using all of the generated transforms by applying selected transforms and discarding the others. The former process has the advantage of making the rate at which coding transforms are calculated lower than the rate at which blocks are encrypted, whereas the latter process has the advantage of building in additional complexity to the encryption.

In a preferred embodiment, each coding transform of the first series is adapted to transpose elements within a block binary data to be encrypted and also to selectively invert ones of those elements. Such a coding transform may be generated as a first sub-transform for achieving the transposition function and another sub-transform for achieving the inversion function. These sub-transforms may be applied in any order in the encrypting step and may be generated and applied independently of each other. It is not essential to transpose every element within the block to a new position within the encrypted block. By selectively maintaining certain elements without transposition, the total number of variations increases.

In alternative embodiments, the coding transform of the first series is adapted to perform only one of the operations of transposing elements within the block to be encrypted and selectively inverting ones of those elements.

In accordance with another aspect of this invention, a method of decrypting blocks of encrypted binary data generated by the methods set out above, comprises:
generating a second series of coding transforms using the same private key;
each coding transform of the second series having an inverse function relative to its counterpart in the first series of coding transforms; and
decrypting the blocks of encrypted binary data by selectively applying the coding transforms of the second series in the same manner as was done with the first series in the encryption stage, thereby recovering the original blocks of binary data.

The decryption method consists of a reversal of the encryption method. Where the encryption consists of the operations of transforming and inverting block elements, these operations are performed in the reverse order during encryption.

A significant advantage of the encryption and decryption methods of the present invention is that the methods can be performed using simple logical switching operations. This feature makes the methods amenable to high-speed operation. It will be apparent from the hardware embodiments of the invention that are described later in this specification. A further advantage lies in flexibility of the block size, as compared with DES and AES.

In one hardware embodiment, encryption apparatus for performing the encryption method of the invention comprises:
an input buffer for receiving plain blocks of binary data to be encrypted;
an input register for receiving the private key;
an arithmetic unit for generating a first series of control outputs, corresponding to the first series of coding transforms, using the private key;
logic circuitry, responsive to the first series of control outputs, for converting input plain blocks of binary data to encrypted blocks of binary data in accordance with the first series of coding transforms; and
an output buffer for outputting the encrypted blocks of binary data.

In another hardware embodiment, decryption apparatus for performing the decryption method of the invention comprises:
an input buffer for receiving blocks of encrypted binary data;
an input register for receiving the private key;
an arithmetic unit for generating a second series of control outputs, corresponding to the second series of coding transforms, using the private key;
logic circuitry, responsive to the second series of control outputs, for converting input blocks of encrypted binary data to plain blocks of binary data in accordance with the second series of coding transforms; and
an output buffer for outputting the plain blocks of binary data.

The invention further provides a computer program product for encrypting binary data using block encryption and a private key, the product comprising program code constituting a set of instructions for performing the encryption method set out above when the program embodied in the product is executed on a processor having a computing function, a computer, or a computer network.

The invention still further provides a computer program product for decrypting blocks of encrypted binary data, the product comprising program code constituting a set of instructions for performing the decryption method set out above when the program embodied in the product is executed on a processor having a computing function, a computer, or a computer network.

The above computer program products may take the form of any suitable storage medium for the program code, in particular electronic memory and magnetic, magneto-optical and optical media. The term "computer program product" as used herein shall be understood to embrace firmware, i.e. instructions that are stored in the read-only memory unit of a computer.

The invention also extends to the computer programs embodied in such products, such programs achieving the technical effects of the invention as disclosed herein when the programs are run.

### Brief Description of Drawings

The invention is illustrated, although not limited in its scope, by the following description of certain preferred embodiments taken in conjunction with the accompanying drawings, in which:
Fig. 1 shows a first hardware embodiment of an apparatus for performing block encryption in accordance with this invention;
Fig. 2 shows a first hardware embodiment of an apparatus for performing decryption, in accordance with this invention, of blocks of data encrypted by the Fig. 1 apparatus;
Fig. 3 shows a second hardware embodiment of an encryption apparatus, being a modification of the Fig. 1 apparatus;
Fig. 4 shows a second hardware embodiment of a decryption apparatus, being a modification of the Fig. 2 apparatus;
Fig. 5 shows a third hardware embodiment of an encryption apparatus, being another modification of the Fig. 1 apparatus; and
Fig. 6 shows a third hardware embodiment of a decryption apparatus, being another modification of the Fig. 2 apparatus.

### Detailed Description of Preferred Embodiments

Hardware embodiments of the invention are described herein since these most readily disclose the principles of the invention and their implementation. The disclosure of the hardware embodiments will put the person of ordinary skill in the art in possession of the invention. Such skilled person will be able to extend the principles to software implementations using only ordinary knowledge and skill in the art and without undue experimentation or the need to exercise any inventive faculty. The hardware embodiments may be realized, by way of example only, in the form of hard-wired logic, an application specific integrated circuit (ASIC), or a programmable integrated circuit. The choice of hardware or software implementation will depend on the particular application and be subject to the usual criteria such as speed, cost, space and power consumption. Embodiments within the scope of the invention may also consist of a mixture of hardware and software, such as software for generating the coding transforms and hardware for applying the transforms to the plain or encrypted data. Although electronic hardware embodiments are described by way of example here, the invention may be implemented using optical processing techniques.

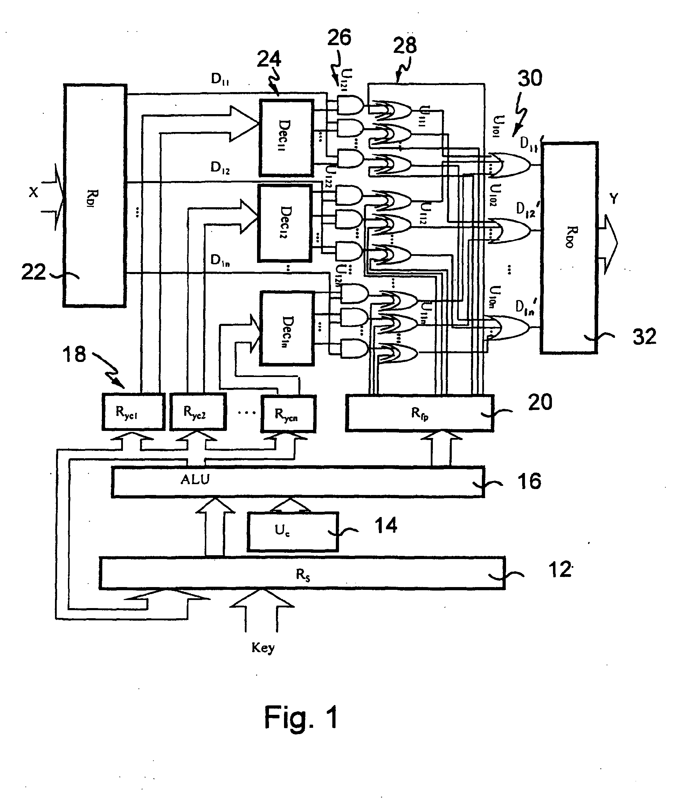

Referring to Fig. 1, the encryption apparatus consists basically of two stages: a code-generating stage and a code-applying stage. The code-generating stage comprises the components referenced 12, 14, 16, 18 and 20. The code-applying stage comprises the components referenced 22, 24, 26, 28, 30 and 32. A private key is input to and stored in a register 12. The private key may consist of a PIN (personal identification number) that is input via a conventional interface such as a keypad. If the PIN is a non-binary, e.g. decimal number, it is converted to binary form before further processing. Alternatively, the private key may be stored on a memory medium such as a memory stick or smart card that is inserted into a complementary socket. The minimum size of the block is 4 bits and, unlike DES and AES, the key-size is advantageously not rigidly dependent on the block size.

In this embodiment, the coding transforms that are generated serve both to transpose and selectively invert elements within a block of input plain data X. These operations are performed separately and applied in series to the input blocks of binary data. In this embodiment, the transposition operation is done first, followed by the inversion operation.

An arithmetic logic unit (ALU) 16 (calculating unit) performs calculations based on the content of the key register 12 and one or more constants stored in a memory 14, and outputs the result to a set of registers 18 that control the transposition operation and a register 20 that controls the inversion operation. The one or more constants stored in the memory 14 may be fixed for any particular application, or may be provided by the user by, for example, being stored on the same medium as, or otherwise provide with, the key. The ALU 16 generates a continuous series of outputs to the registers 18 and 20. In this embodiment, the sequential outputs from the ALU 16 are applied individually to the sequence of input plain data blocks so that a different transform is applied to each input block. In this embodiment, the sequential transforms for the transposition function are generated based on a preceding output, hence the feedback loop from the ALU 16 to the key register 12. The outputs to the register 20 for the inversion function may be processed either independently of the transposition outputs or similarly based on a preceding transposition function result.

The input plain data block has n elements, each element consisting of a bit with either binary value zero (0) or binary value one (1). There are a total of n registers 18 that correspond respectively to the first, second, ... nth bits of the input data block. The code-applying stage includes a set of n decoders 24 corresponding to the first, second, ... nth bits of the input data block. Each decoder receives an input number from an associated register 18. This number determines to which position the particular element of the input data block is mapped in the transposition function. Each decoder has n outputs. One selected output, corresponding to the mapped position in the encrypted block, has the binary value 1 whereas the remaining non-selected outputs each have the binary value 0. The selected output is unique to each of the decoders 24 and determined by the input numbers received from the associated registers 18.

Each decoder 24 has an associated set of n AND gates 26. Each AND gate has two inputs, one receiving a respective output from the decoder, whereas all the other inputs receive the bit of the input data block from an input buffer or register 22. By virtue of the logical AND function of the gates 26, the input data bit from the register 22 is transferred to the output of the AND gate that receives the selected output from the decoder 24. In this way, each bit of the input block of data is transferred to a different one of the n sets of AND gates and to a different selected AND gate for each set, thereby achieving the transposition, or shuffling, of the input block of data bits. The selective inversion function is realized using an (nxn)-bit number that is output from the register 20, in combination with n sets of n EXCLUSIVE-OR (XOR) gates 28. Each of the XOR gates 28 has one input that receives an individual one of nxn bits of the number output from the register 20. The other inputs of each set of XOR gates 28 receive the outputs of the respective associated AND gates 26. By virtue of the logical XOR operation, when the associated bit from the register 20 is a logical 0, the outputs from the AND gates 26 are passed unchanged by the XOR gates 28. On the other hand, when the output bit of the register 20 is a logical 1, the gates 28 invert the outputs from the associated AND gates 26. Finally, the outputs from the first XOR gate 28 of each set are combined logically in an OR gate 30 and the output is stored in an output buffer or register 32 as the first bit of the encrypted block of data. Similarly, the outputs from the second, ... nth XOR gates of each set are logically combined to provide the second, ... nth bits of the encrypted block of data to the output buffer 32.

Although not shown in Fig. 1, it will be understood that the timing of all operations is controlled by a system clock so as to coordinate the serial flow of outputs from the registers 18 and 20 with the flow of blocks of data from the register 22 through the logic circuitry of components 24, 26, 28, 30 to the output buffer 32.

With a block size of n, the above embodiment provides a total of (n!)² x 2^{nxn} possible coding transforms. This value demonstrates the power of the encryption method even for small values of n such as 8 or 16. The factor (n!)² relates to the output of the registers 18 whereas the factor 2^{nxn} relates to the output of the register 20. The n bits of the input data block may be arranged in n! different variants. These variants can be ordered in n! different ways, thereby giving (n!)² possible starting points for generation of the transposition sub-transform. Each starting point provides a different sub-transform series. The second factor 2^{nxn} is the total number of possible outputs from the register 20, expressed in decimal. The values range from 0 to (2^{nxn}-1).

The ALU 16 may be arranged to generate the outputs for the registers 18 and 20 in any convenient or desired manner. The scope of the invention is not limited in this regard. The only requirement is that the calculation is repeatable so as to realize the corresponding transforms required for decryption of the encrypted data.

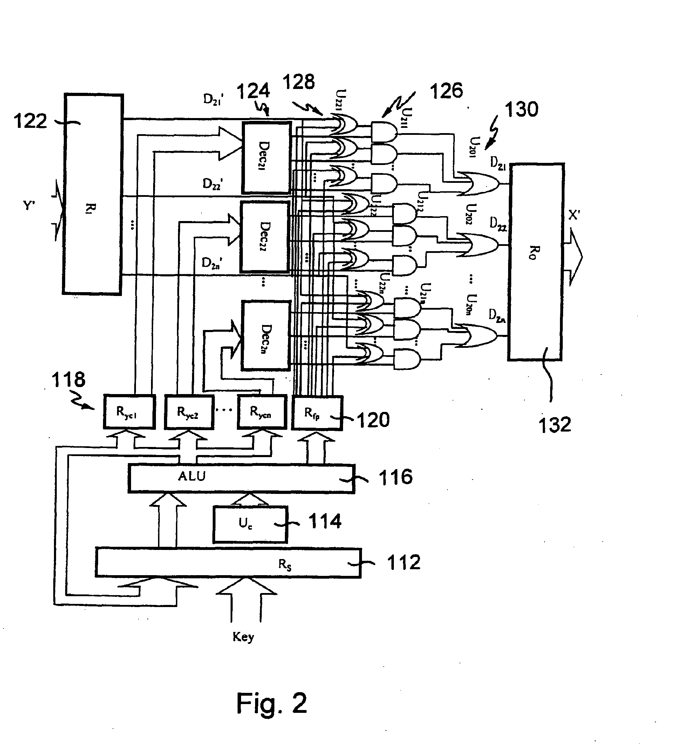

Fig. 2 shows decryption apparatus that can be used to the decrypt blocks of data encrypted by the apparatus of Fig. 1. The decryption process is essentially a reversal of the encryption process. In Fig. 2, the components that have the same or a similar function to those in the Fig. 1 apparatus have been given the same reference numerals, except for the addition of 100. Based on the same private key that is stored initially in the register 112, the ALU 116 generates a second series of outputs that are complementary to the first series generated by the encryption apparatus of Fig. 1. The outputs stored in the registers 118 served to map the bits in the encrypted block of data back to their original positions in the plain data. The (nxn)-bit number output from the register 120 serves to invert for the second time the same bits that were inverted in the encryption process, since two serial inversion operations will restore the original data. In view of the detailed description of the encryption apparatus of Fig. 1, the circuitry of Fig. 2 is self-explanatory and so does not need to be described in detail herein. The decryption process applies the reverse inversion operation first, followed by the reverse transposition operation. The encrypted blocks of data Y' are input through a buffer or register 122 and after processing the decrypted blocks of data X' are output from the buffer or register 132.

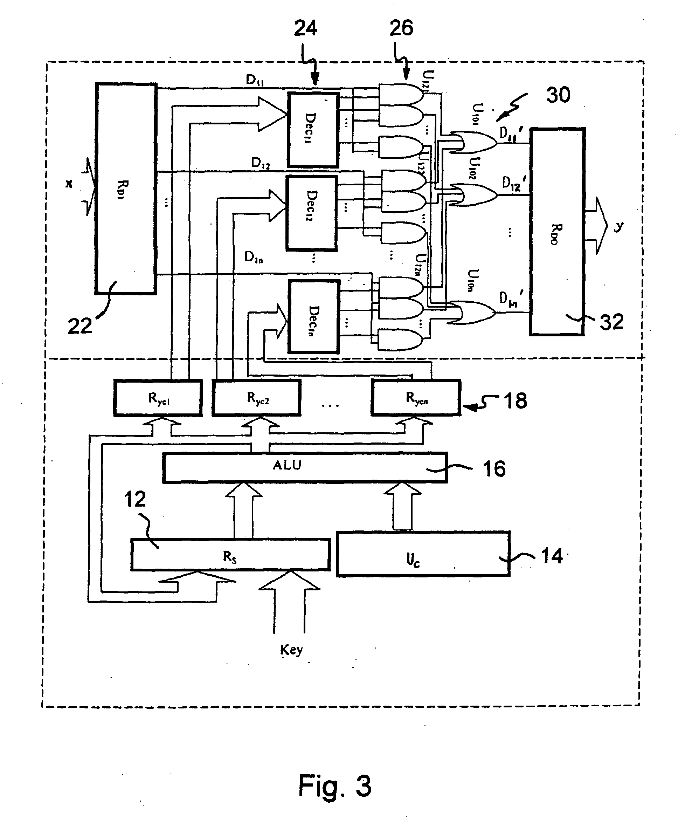

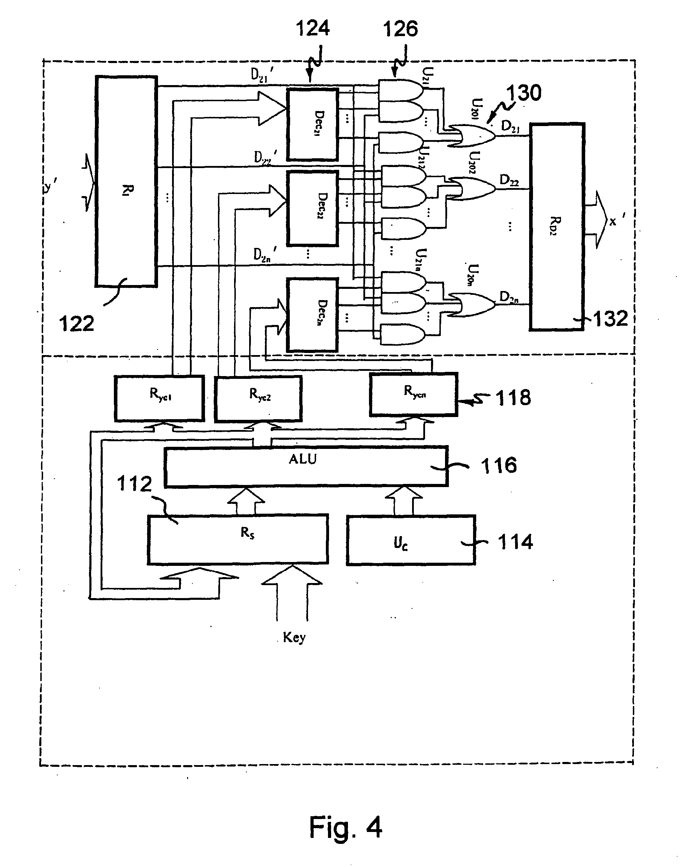

Figs. 3 and 4 correspond to modifications of the Fig. 1 and Fig. 2 embodiments, respectively. In these modified embodiments, the selective inversion function has been omitted so that the registers 20 and 120 and the XOR gate 28 and 128 are not required. The operation of the remaining components is the same as for Figs. 1 and 2.

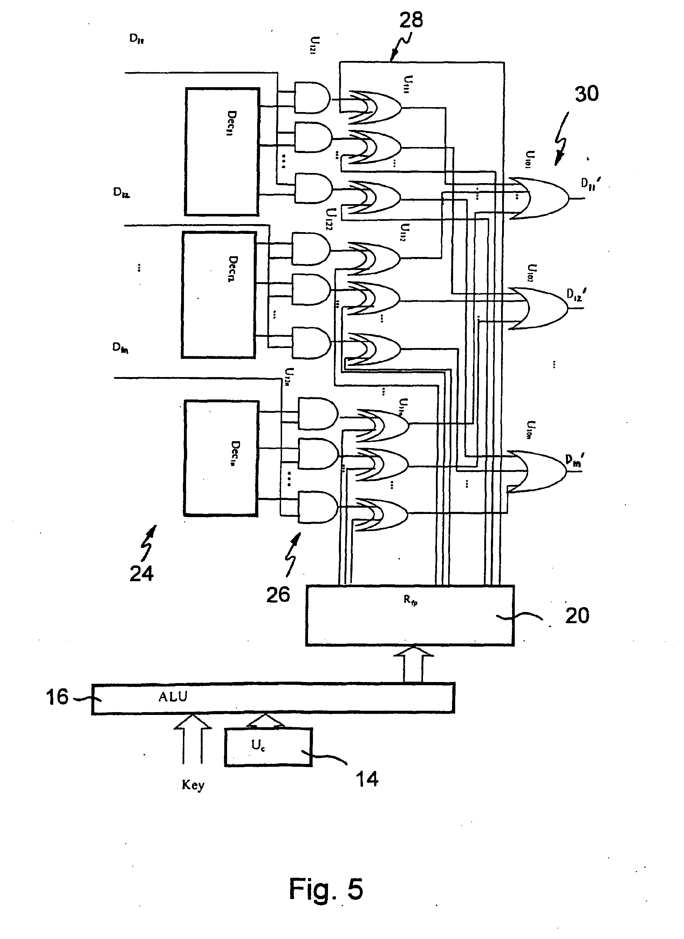

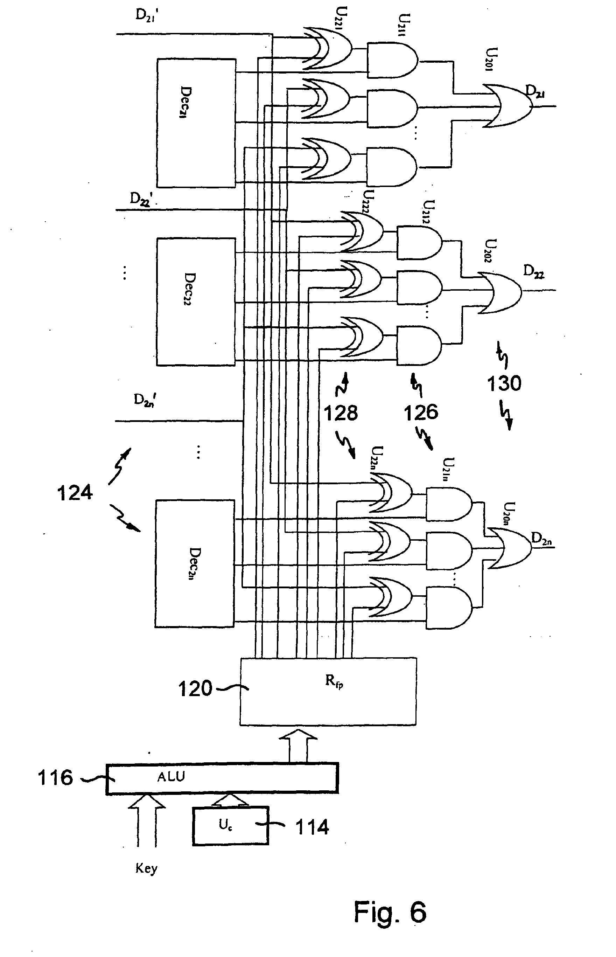

Figs. 5 and 6 correspond to alternative modifications of the Fig. 1 and Fig. 2 embodiments, respectively. In these alternative modified embodiments, the transposition function has been omitted, so that the registers 18 and 118 are not required. Although the decoders 24 and 124 have been retained, their outputs are fixed and do not change with time. The operation of the remaining components remains the same as described for Figs. 1 and 2.

Although the embodiments of Figs. 3 to 6 provide a smaller number of possible transforms for a given value of n, these embodiments still encompass the basic principle of the invention of realizing a cipher that varies with time, in essence a moving target for anyone trying to break the encryption.

In summary, the invention provides a highly powerful, fast and secure encryption system that can be readily implemented using available technology. The invention has a very wide scope of application. Briefly, the technique can be applied to any data expressed in binary-coded form that needs to be encrypted. Most applications involve transmission or storage of data that is vulnerable to interception or theft. Examples include, but are not limited to, database security, internet security, e-commerce security, e-government security, encryption of fixed line, cordless and wireless telephone communication, stenography, intellectual property protection (for example, in the form of music and/or video recordings or downloads), forgery prevention techniques, smart cards, and applications in all text, sound and image data storage and communication.

By way of example only, in an internet (or other network) application, the invention may be embodied in programs run on the terminals exchanging the data to be protected. In a wireless telephone (or any other form of wireless terminal), the invention may be embodied in the main processor of the handset (terminal) or in a dedicated chip. If the encryption/decryption circuit is provided on a SIM (Subscriber Identification Module) card, then its use can be confined to certain networks and countries, and possibly enabled/disabled by the network operator.

The invention may be embodied in numerous forms other than those specifically described herein, without departing from the scope of the invention as defined in the appending claims.

## Claims

1. A method of encrypting binary data using block encryption and a private key, the method comprising:
generating a series of coding transforms using said private key, said series of coding transforms being generated in a repeatable manner;
each coding transform of the series adapted to modify elements within a block of said binary data to be encrypted; and
encrypting blocks of said binary data by selectively applying said coding transforms.

2. A method of encrypting binary data according to claim 1, wherein a different coding transform of said series is used to encrypt each said block.

3. A method of encrypting binary data according to claim 2, wherein sequentially generated coding transforms of said series are used to encrypt sequential blocks containing said binary data.

4. A method of encrypting binary data according to any one of claims 1 to 3, wherein each coding transform of said series is adapted to transpose elements within the block of binary data to be encrypted.

5. A method of encrypting binary data according to any one of claims 1 to 3, wherein each coding transform of said series is adapted to selectively invert ones of said elements within the block of binary data to be encrypted.

6. A method of encrypting binary data according to any one of claims 1 to 3, wherein each coding transform of said series is adapted to transpose elements within a block of binary data to be encrypted and to selectively invert ones of those elements.

7. A method of encrypting binary data according to claim 6, wherein each coding transform of said series is generated as one sub-transform for achieving the transposition function and another sub-transform for achieving the inversion function, and wherein said sub-transforms are applied in any order in the encrypting step.

8. A method of encrypting binary data according to any one of the preceding claims, wherein said series of coding transforms is generated in a pseudo-random manner.

9. Encryption apparatus for performing the method of any one of claims 1 to 8, the apparatus comprising:
an input buffer for receiving plain blocks of binary data to be encrypted;
an input register for receiving said private key;
an arithmetic unit for generating a series of control outputs, corresponding to said series of coding transforms, using said private key;
logic circuitry, responsive to said series of control outputs, for converting input plain blocks of binary data to encrypted blocks of binary data in accordance with said series of coding transforms; and
an output buffer for outputting said encrypted blocks of binary data.

10. A computer program product for encrypting binary data using block encryption and a private key, the product comprising program code constituting a set of instructions for performing the method of any one of claims 1 to 8 when the program embodied in said product is executed on a processor having a computing function, a computer, or a computer network.

11. A computer program for encrypting binary data using block encryption and a private key, the program comprising program code constituting a set of instructions for performing the method of any one of claims 1 to 8 when the program is executed on a processor having a computing function, a computer, or a computer network.
